# EUROPEAN PATENT SPECIFICATION

(11) **EP 4 296 748 B1**
(45) Date of publication and mention of the grant of the patent: **18.11.2026**
(21) Application number: 22795177.9
(22) Date of filing: 17.01.2022
(51) Int. Cl.: G02B 21/00, G01N 21/64, G02B 21/06, G02B 21/18

(54) **CONFOCAL MICROSCOPE UNIT, CONFOCAL MICROSCOPE, AND CONTROL METHOD FOR CONFOCAL MICROSCOPE UNIT**
KONFOKALE MIKROSKOPEINHEIT, KONFOKALES MIKROSKOP UND STEUERUNGSVERFAHREN FÜR EINE KONFOKALE MIKROSKOPEINHEIT
UNITÉ DE MICROSCOPE CONFOCAL, MICROSCOPE CONFOCAL ET PROCÉDÉ DE COMMANDE POUR UNITÉ DE MICROSCOPE CONFOCAL

(30) Priority: 26.04.2021 JP 2021073870
(43) Date of publication of application: 27.12.2023
(73) Proprietor: HAMAMATSU PHOTONICS K.K., Hamamatsu-shi Shizuoka 435-8558 (JP)
(72) Inventor: YAMADA, Toshiki, Hamamatsu-shi, Shizuoka 435-8558 (JP); MIHOYA, Takashi, Hamamatsu-shi, Shizuoka 435-8558 (JP)
(74) Representative: Hoffmann Eitle
(86) International application number: PCT/JP2022/001369
(87) International publication number: WO 2022/230254

(56) References cited:
- EP-A1- 2 063 306
- WO-A1-2009/104718
- WO-A1-2020/196783
- DE-A1- 102019 213 130
- JP-A- 2008 015 030
- JP-A- 2009 152 545

## Description

### Technical Field

The present disclosure relates to a confocal microscope unit constituting a confocal microscope and a confocal microscope.

### Background Art

Conventionally, a confocal microscope unit that constitutes a confocal microscope by being attached to a connection port of a microscope including a microscope optical system is known (for example, see Patent Literatures 1 to 3 below). According to such a confocal microscope unit, confocal imaging using a microscope can be easily realized.

### Citation List

### Patent Literature

Patent Literature 1: International Publication WO 2020/196783
Patent Literature 2: International Publication WO 2020/196782
Patent Literature 3: International Publication WO 2020/196784
EP2063306 A1 relates to a light source apparatus which includes semiconductor laser elements that emit laser light according to an inputted current signal, a light receiving element that receives the laser light emitted from the semiconductor laser element, and a controller that controls light emission of the semiconductor laser element, wherein the controller includes a first semiconductor laser element drive circuit that outputs a current signal to the semiconductor laser elements according to an instruction signal, a second semiconductor laser element drive circuit that adjusts the current signal on the basis of light quantity of the laser light received by the light receiving element, and outputs the adjusted current signal to the semiconductor laser element, and a circuit switching section that switches between the first and the second semiconductor laser element drive circuits according to an instruction signal.

### Summary of Invention

### Technical Problem

In the above-described conventional confocal microscope unit, an optical image of a sample is obtained by scanning the sample with excitation light. Here, when scanning the sample two-dimensionally with the excitation light, it is necessary to change the scan speed on the sample. Even in such a case, it is preferable to uniformize the irradiation energy of the excitation light per unit area (unit length) of the sample.

Here, an aspect of the embodiment has been made in view of such problems and an object thereof is to provide a confocal microscope unit and a confocal microscope capable of precisely uniformizing the irradiation energy of excitation light for a sample.

### Solution to Problem

A confocal microscope unit according to an aspect of the embodiment is a confocal microscope unit as defined in claim 1.

Alternatively, a confocal microscope according to another aspect of the embodiment includes: the confocal microscope unit of the above-described aspect; and a microscope including the microscope optical system and a connection port to which the confocal microscope unit is attached.

Alternatively, a control method for a confocal microscope unit according to still another aspect of the embodiment is defined in claim 6.

According to the above-described aspect, another aspect, and still another aspect, the excitation light output from the light source in the light source unit is scanned on the sample by the scan mirror and an image of the sample obtained according to the scanning can be observed through the microscope. In the above-described light source unit, a data table indicating a correspondence between the drive current supplied to the light source and the light intensity of the excitation light is generated and stored in advance by the function of the setting mode of the control unit and the control signal corresponding to the drive current corresponding to the target light intensity is output to the drive unit supplying the drive current to the light source as the drive signal by the function of the operation mode of the control unit. In addition, the drive current is stopped when the light intensity of the excitation light exceeds a predetermined value by the function of the operation mode. Accordingly, when the target light intensity is set to change the light intensity of the excitation light according to a change in the scan speed of the excitation light on the sample, the light source can be driven at high speed and with high precision so that the light intensity of the excitation light changes accordingly. Further, since the control of stopping the excitation light when the light intensity of the excitation light exceeds a predetermined value is used, the confocal microscope unit can be safely used. As a result, it is possible to uniformize the irradiation energy of the excitation light to the sample with high precision and to realize confocal imaging with high safety.

### Advantageous Effects of Invention

According to an aspect of the present disclosure, it is possible to uniformize the irradiation energy of the excitation light to the sample with high precision.

### Brief Description of Drawings

FIG. 1 is a schematic configuration diagram of a confocal microscope A according to an embodiment.
FIG. 2 is a block diagram showing a schematic configuration of a light source device 10a of FIG. 1.
FIG. 3 is a diagram showing a detailed circuit configuration of the light source device 10a of FIG. 1.
FIG. 4 is a circuit diagram showing a switching state of the light source device 10a when a setting mode is operated.
FIG. 5 is a circuit diagram showing a switching state of the light source device 10a when an operation mode is operated.
FIG. 6 is a flowchart showing an operation procedure of a function of the setting mode of the light source device 10a.
FIG. 7 is a flowchart showing an operation procedure of a function of the operation mode of the light source device 10a.
FIG. 8 is a plan view showing an example of a form of scanning first excitation light on a sample M using the confocal microscope A.
FIG. 9 is a graph showing a temporal change in the light intensity of laser light output from the light source device 10a in correspondence with a scan form shown in FIG. 8.
FIG. 10 is a graph showing a temporal change in the light intensity of FIG. 9 in correspondence with a sweep waveform of a scan mirror 4.
FIG. 11 is a diagram showing a circuit configuration of a light source device 110a according to a modified example.

### Description of Embodiments

Hereinafter, embodiments of the present disclosure will be described in detail with reference to the accompanying drawings. Note that, in the description, the same reference numerals are used for the same elements or elements having the same function, and overlapping descriptions are omitted.

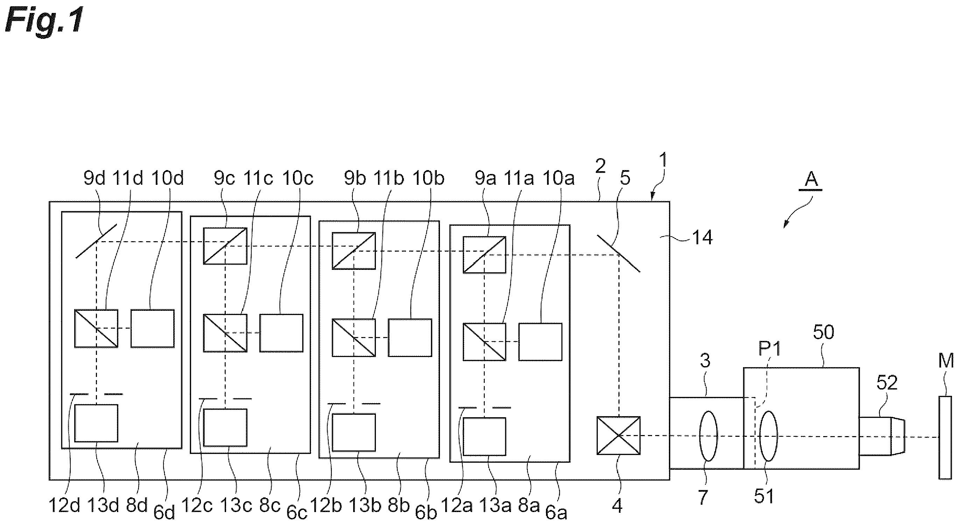

FIG. 1 is a schematic configuration diagram of a confocal microscope A according to the embodiment. The confocal microscope A shown in FIG. 1 constitutes a confocal microscope that acquires an image that enables construction of an optical tomographic image of a sample M to be observed and is configured by connecting a confocal microscope unit 1 to an external unit connection port P1 of the microscope 50. This confocal microscope unit 1 is an apparatus that irradiates the sample M placed on a stage or the like of the microscope 50 with excitation light via a microscope optical system such as an imaging lens 51 and an objective lens 52 inside the microscope 50, receives (detects) fluorescence generated from the sample M in response to the excitation light via the microscope optical system of the microscope 50, and generates and outputs an optical tomographic image.

Specifically, the confocal microscope unit 1 includes a main housing 2, a lens barrel 3 which constitutes a part of the main housing 2 and is connected to the connection port P1 of the microscope 50 in an attachable and detachable manner, a scan mirror 4 which is fixed inside the main housing 2, a fixed mirror 5, first to fourth subunits 6a to 6d, and a scan lens 7 which is fixed inside the lens barrel 3. Hereinafter, each component of the confocal microscope unit 1 will be described in detail.

The scan lens 7 inside the lens barrel 3 is an optical element that has a function of relaying a reflection surface of the scan mirror 4 to the pupil position of the objective lens 52 and forming a spot on a primary imaging plane of the microscope optical system of the microscope 50. The scan lens 7 guides the excitation light scanned by the scan mirror 4 to the microscope optical system to irradiate the sample M and guides the fluorescence generated according to the irradiation from the sample M to the scan mirror 4.

The scan mirror 4 inside the main housing 2 is, for example, an optical scanning element such as a MEMS (Micro Electro Mechanical System) mirror configured so that the reflecting plate can be tilted on two axes. The scan mirror 4 has a role of scanning excitation light output from the first to fourth subunits 6a to 6d on the sample M by continuously changing the reflection angle and guiding fluorescence generated according to the excitation light toward the first to fourth subunits 6a to 6d.

The fixed mirror 5 is a light reflecting element which is fixed in the main housing 2, reflects the excitation light output from the first to fourth subunits 6a to 6d toward the scan mirror 4, and reflects the fluorescence reflected by the scan mirror 4 toward the first to fourth subunits 6a to 6d coaxially with the excitation light.

The first subunit 6a includes a base plate 8a as well as a dichroic mirror (first beam splitter) 9a, a light source device (light source unit) 10a, a dichroic mirror 11a, a pinhole plate (first aperture member) 12a, and a photodetector (first photodetector) 13a arranged on the base plate 8a. The dichroic mirror 9a is a beam splitter which is fixed in a fluorescence reflection direction of the fixed mirror 5 and has a property of reflecting first excitation light of a wavelength λ₁ irradiated from the first subunit 6a and first fluorescence of a wavelength range Δλ₁ generated from the sample M according to the first excitation light and transmitting light of a wavelength longer than those of the first excitation light and the first fluorescence. The dichroic mirror 11a is a beam splitter which is provided in a first fluorescence reflection direction of the dichroic mirror 9a and has a property of transmitting the first fluorescence of the wavelength range Δλ₁ and reflecting the first excitation light of the wavelength λ₁ shorter than the wavelength range Δλ₁. The light source device 10a is a device incorporating a light emitting element (for example, laser diode) that outputs the first excitation light (for example, laser light) of the wavelength λ₁ and is disposed so that the first excitation light is reflected by the dichroic mirror 11a toward the dichroic mirror 9a coaxially with the first fluorescence. The pinhole plate 12a is an aperture member that is disposed so that the pinhole position coincides with the conjugated position of the spot of the first excitation light on the sample M and limits the light flux of the first fluorescence and constitutes a confocal optical system together with the light source device 10a and the like. This pinhole plate 12a has a pinhole diameter that can be adjusted from the outside so that the resolution of the image detected by the photodetector 13a and the signal intensity of the image can be changed. The photodetector 13a has a detection surface which is disposed to face the pinhole plate 12a and receives and detects the first fluorescence passing through the pinhole plate 12a. Additionally, the photodetector 13a is a photomultiplier tube, photodiode, avalanche photodiode, MPPC (Multi-Pixel Photon Counter), HPD (Hybrid Photo Detector), area image sensor, or the like.

The second to fourth subunits 6b to 6d also have the same configuration as the first subunit 6a.

That is, the second subunit 6b includes a base plate 8b, a dichroic mirror (second beam splitter) 9b, a light source device 10b, a dichroic mirror 11b, a pinhole plate (second aperture member) 12b, and a photodetector (second photodetector) 13b. The dichroic mirror 9b has a property of reflecting second excitation light of a wavelength λ₂ (>λ₁) irradiated by the second subunit 6b and second fluorescence of a wavelength range Δλ₂ generated from the sample M according to the second excitation light and transmitting light of a wavelength longer than those of the second excitation light and the second fluorescence. The dichroic mirror 11b has a property of transmitting the second fluorescence of the wavelength range Δλ₂ and reflecting the second excitation light of the wavelength λ₂ shorter than the wavelength range Δλ₂. The light source device 10b is a device incorporating a light emitting element that outputs the second excitation light of the wavelength λ₂. The pinhole plate 12b is an aperture member that is disposed so that the pinhole position coincides with the conjugated position of the spot of the second excitation light on the sample M and limits the light flux of the second fluorescence. The photodetector 13b has a detection surface which is disposed to face the pinhole plate 12b and receives and detects the second fluorescence passing through the pinhole plate 12b. Additionally, the photodetector 13b is a photomultiplier tube, photodiode, avalanche photodiode, MPPC (Multi-Pixel Photon Counter), HPD (Hybrid Photo Detector), area image sensor, or the like.

The third subunit 6c includes a base plate 8c, a dichroic mirror (third beam splitter) 9c, a light source device 10c, a dichroic mirror 11c, a pinhole plate (third aperture member) 12c, and an photodetector (third photodetector) 13c. The dichroic mirror 9c has a property of reflecting third excitation light of a wavelength λ₃ (>λ₂) irradiated by the third subunit 6c and third fluorescence of a wavelength range Δλ₃ generated from the sample M according to the third excitation light and transmitting light of a wavelength longer than those of the third excitation light and the third fluorescence. The dichroic mirror 11c has a property of transmitting the third fluorescence of the wavelength range Δλ₃ and reflecting the third excitation light of the wavelength λ₃ shorter than the wavelength range Δλ₃. The light source device 10c is a device incorporating a light emitting element that outputs the third excitation light of the wavelength λ₃. The pinhole plate 12c is an aperture member that is disposed so that the pinhole position coincides with the conjugated position of the spot of the third excitation light on the sample M and limits the light flux of the third fluorescence. The photodetector 13c has a detection surface which is disposed to face the pinhole plate 12c and receives and detects the third fluorescence passing through the pinhole plate 12c. Additionally, the photodetector 13c is a photomultiplier tube, photodiode, avalanche photodiode, MPPC (Multi-Pixel Photon Counter), HPD (Hybrid Photo Detector), area image sensor, or the like.

The fourth subunit 6d includes a base plate 8d, a total reflection mirror 9d, a light source device 10d, a dichroic mirror 11d, a pinhole plate (fourth aperture member) 12d, and an photodetector (fourth photodetector) 13d. The total reflection mirror 9d reflects fourth excitation light of a wavelength λ₄ (>λ₃) irradiated by the fourth subunit 6d and fourth fluorescence of a wavelength range Δλ₄ generated from the sample M according to the fourth excitation light. The dichroic mirror 11d has a property of transmitting the fourth fluorescence of the wavelength range Δλ₄ and reflecting the fourth excitation light of the wavelength λ₄ shorter than the wavelength range Δλ₄. The light source device 10d is a device incorporating a light emitting element that outputs the fourth excitation light of the wavelength λ₄. The pinhole plate 12d is an aperture member that is disposed so that the pinhole position coincides with the conjugated position of the spot of the fourth excitation light on the sample M and limits the light flux of the fourth fluorescence. The photodetector 13d has a detection surface which is disposed to face the pinhole plate 12d and receives and detects the fourth fluorescence passing through the pinhole plate 12d. Additionally, the photodetector 13d is a photomultiplier tube, photodiode, avalanche photodiode, MPPC (Multi-Pixel Photon Counter), HPD (Hybrid Photo Detector), area image sensor, or the like.

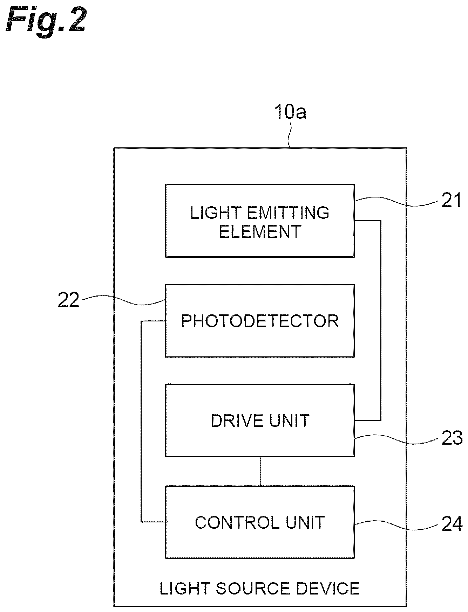

Next, the configuration of the light source device 10a will be described in detail. FIG. 2 is a block diagram showing a schematic configuration of the light source device 10a.

The light source device 10a includes a light emitting element (light source) 21 which outputs laser light as the first excitation light of the wavelength λ₁, an photodetector 22 which detects the laser light output from the light emitting element 21 and outputs a detection signal, a drive unit 23 which supplies a drive current to the light emitting element 21, and a control unit 24 which outputs a drive signal controlling the drive current to the drive unit 23 according to a target light intensity. The light emitting element 21 is, for example, a laser diode (hereinafter, simply referred to as "LD"). However, the light emitting element 21 may be another light emitting element such as a light emitting diode (LED). The photodetector 22 is a photomultiplier tube, photodiode, avalanche photodiode, MPPC (Multi-Pixel Photon Counter), HPD (Hybrid Photo Detector), area image sensor, or the like. The drive unit 23 is a voltage control current source which includes a transistor generating a drive current according to a drive signal being a voltage signal.

The control unit 24 incorporated in the light source device 10a includes a microcomputer that includes a CPU (Central Processing Unit) which is a processor, a RAM (Random Access Memory) or ROM (Read Only Memory) which is a storage medium, a communication module, and an input/output module. The control unit 24 reads a program by hardware such as CPU and RAM to operate the communication module, the input/output module, and the like under the control of CPU and executes reading and writing of data in RAM to realize a function to be described later. Additionally, the CPU may be a single piece of hardware or may be implemented in a programmable logic such as an FPGA like a soft processor. The RAM and ROM may be stand-alone hardware or may be embedded in programmable logic such as FPGA. Various data necessary for executing this computer program and various data generated by executing this computer program are all held in built-in memories such as ROM and RAM, or storage media such as hard disk drives.

The light source devices 10b, 10c, and 10d have the same configuration as the light source device 10a and are different only in the wavelength of the laser light output from the light emitting element 21. Hereinafter, only the detailed configuration of the light source device 10a will be described.

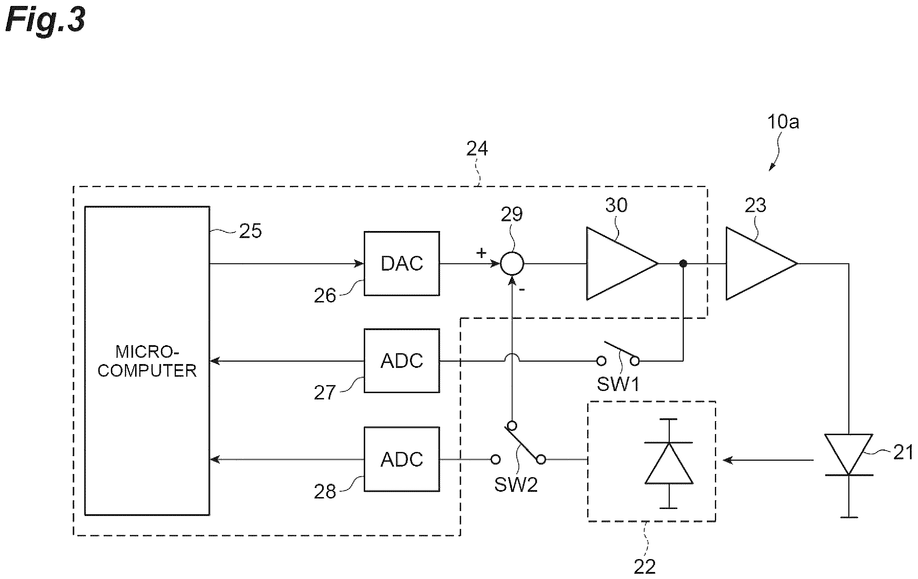

FIG. 3 is a diagram showing a detailed circuit configuration of the light source device 10a. The control unit 24 constituting the light source device 10a includes a microcomputer 25, a DA converter (hereinafter, referred to as "DAC") 26, AD converters (hereinafter, referred to as "ADC") 27 and 28, a subtractor 29, and an amplifier 30. The light source device 10a is further provided with two switches SW1 and SW2 for switching the signal transmission path.

The DAC 26 receives a control value indicating the target light intensity of the laser light output from the microcomputer 25, converts the control value into a control signal as a voltage signal, and outputs the control signal to the subtractor 29. The subtractor 29 outputs different types of signals according to modes. First, in a setting mode, the subtractor 29 receives the control signal and the detection signal output from the photodetector 22 via the switch SW2, generates a difference signal indicating a difference between the control signal and the detection signal, and outputs the difference signal to the amplifier 30. On the other hand, in an operation mode, the control signal output from the DAC 26 is output to the amplifier 30 as it is. Further, the amplifier 30 also has different functions depending on the mode. First, in the setting mode, a drive signal is adjusted and output so that the difference signal output from the subtractor 29 is minimized. On the other hand, in the operation mode, a drive signal obtained by amplifying the control signal output from the subtractor 29 by a predetermined amplification factor is output. The drive signal output from the amplifier 30 is converted into a drive current supplied to the light emitting element 21 in the drive unit 23. That is, it is possible to control the drive current output from the drive unit 23 to the light emitting element 21 and to control the light intensity of the laser light output from the light emitting element 21 by controlling the drive signal.

The switch SW2 switches the output destination of the detection signal generated by the photodetector 22 between the subtractor 29 and the ADC 28. The ADC 28 converts the light intensity of the laser light indicated by the detection signal into a digital value and inputs the digital value to the microcomputer 25. The SW1 is provided on the signal transmission path between the output of the amplifier 30 and the input of the ADC 27 and turns on and off the input of the drive signal from the amplifier 30 to the ADC 27. The ADC 27 converts the drive value indicated by the drive signal into a digital value and inputs the digital value to the microcomputer 25.

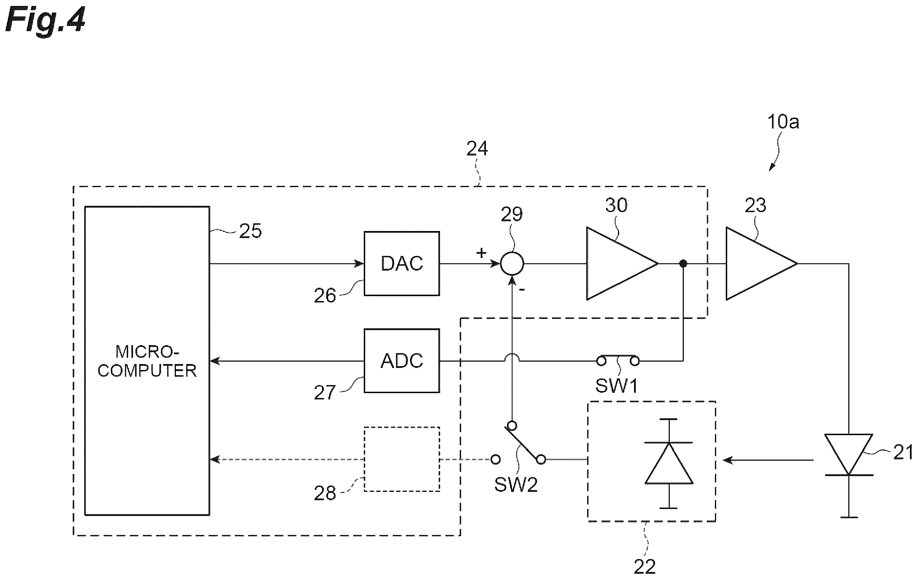

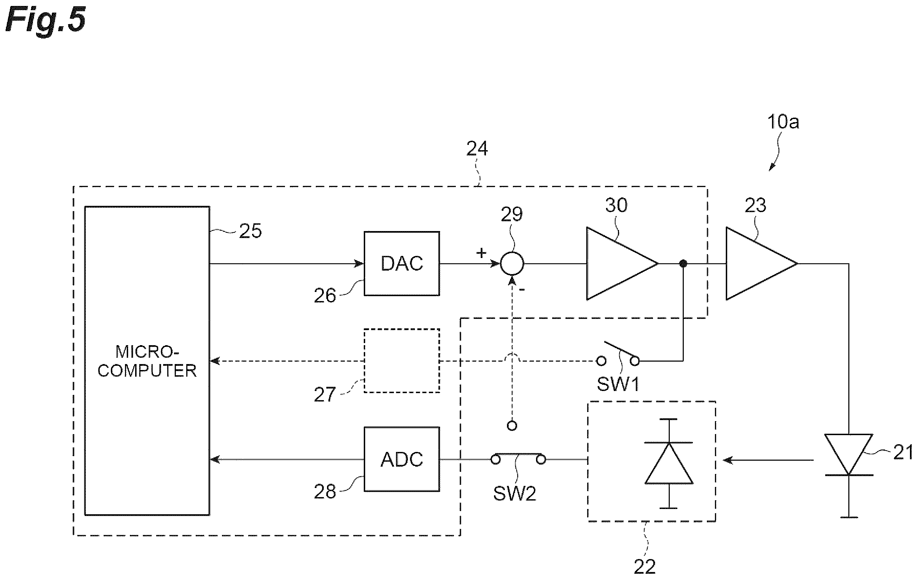

The light source device 10a with the above-described configuration is configured to be operated by switching between two types of functions including the setting mode and the operation mode according to the control of the microcomputer 25. FIG. 4 is a circuit diagram showing a switching state of the light source device 10a when the setting mode is operated and FIG. 5 is a circuit diagram showing a switching state of the light source device 10a when the operation mode is operated.

When the function of the setting mode is operated, the operation is as below. That is, as shown in FIG. 4, the switch SW1 is turned on and the switch SW2 is switched to set the detection signal transmission path toward the subtractor 29. Accordingly, the detection signal from the photodetector 22 is fed back to the control signal output from the DAC 26 and the drive signal output from the amplifier 30 is input to the ADC 27. According to such a connection configuration, when the function of the setting mode is operated, the control unit 24 executes the correction (adjustment) of the drive signal so that the difference between the detection signal and the control signal decreases, that is, executes APC control (Auto Power Control: first control) of decreasing the drive signal when the light intensity indicated by the detection signal is larger than the light intensity indicated by the control signal and increasing the drive signal when the light intensity indicated by the detection signal is smaller than the light intensity indicated by the control signal, and adjusts and outputs the drive signal based on the control signal and the detection signal. At this time, the control unit 24 executes the APC control while changing the voltage value of the control signal in the range of the light intensity of the laser light assumed to be used in the confocal microscope unit 1, generates LUTs (Look Up Tables) which are data tables indicating a correspondence between the drive value corresponding to the drive signal and the light intensity of the laser light indicated by the voltage value of the control signal, and stores the generated LUTs in a built-in memory such as RAM in the microcomputer 25. Additionally, the drive value corresponding to the drive current set in the LUTs is a value obtained by converting the value of the drive current into a value before being amplified by the amplifier 30. Further, the voltage value of the control signal is changed, for example, by setting the voltage value corresponding to the maximum light intensity to 100% and changing the voltage value from 1% to 100% in increments of 0.5%.

When the function of the operation mode is operated, the operation is as below. That is, as shown in FIG. 5, the switch SW1 is turned off and the switch SW2 is switched to set the detection signal transmission path toward the ADC 28. Accordingly, the detection signal from the photodetector 22 is input to the ADC 28. According to such a connection configuration, when the function of the operation mode is operated, the control unit 24 inputs the control signal to the amplifier 30 as it is and executes ACC control (Auto Current Control: second control) of outputting the control signal amplified by the amplifier 30 as the drive signal. At this time, when controlling the light intensity of the laser light to the target light intensity, the control unit 24 reads out the LUTs from a built-in memory such as RAM in the microcomputer 25 and specifies the drive value corresponding to the target light intensity. Then, the control unit 24 executes the ACC control by using the control signal having the specified drive value. In addition, when the function of the operation mode is operated, the control unit 24 also monitors the light intensity of the laser light indicated by the detection signal and controls the drive unit 23 so that the generation of the drive current is stopped when the light intensity exceeds a predetermined reference value (for example, 1.5 mW). Accordingly, even when four light source devices 10a to 10d are combined, it is possible to suppress the laser output to four times the predetermined reference value (for example, 1.5 mW × 4 = 4.5 mW) or less and to safely use the confocal microscope unit 1 even outside the laser controlled area.

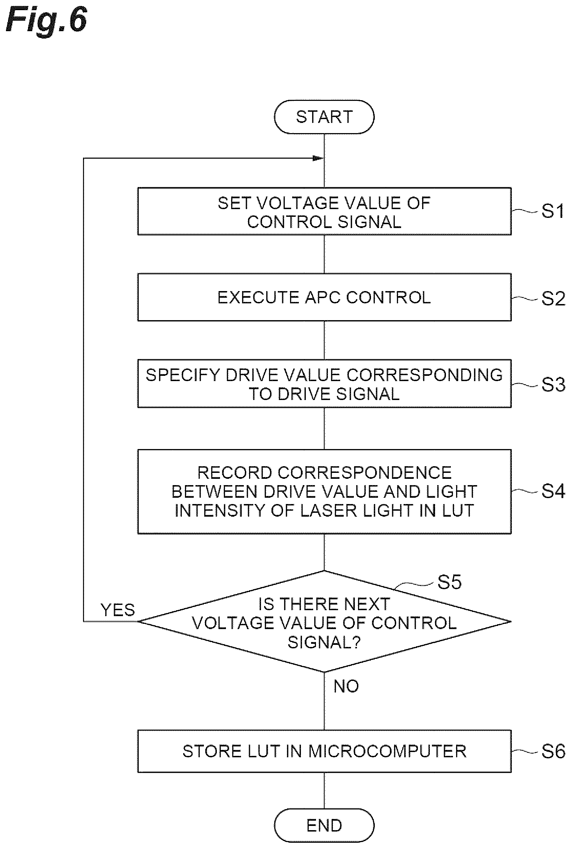

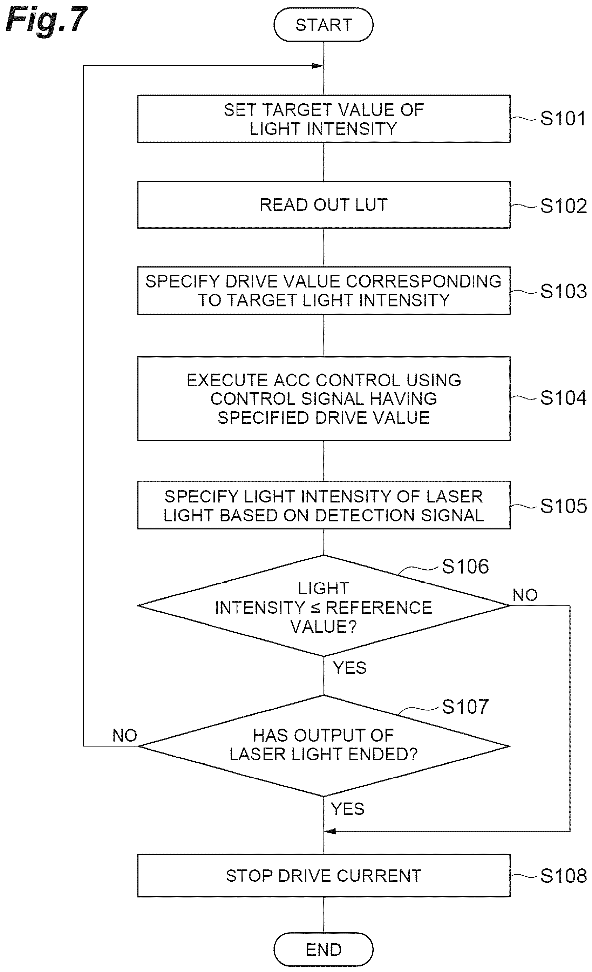

Next, the operation procedure of the functions of the light source device 10a of this embodiment, that is, the control method for the confocal microscope unit according to this embodiment will be described. FIG. 6 is a flowchart showing the operation procedure of the functions of the setting mode of the light source device 10a and FIG. 7 is a flowchart showing the operation procedure of the functions of the operation mode of the light source device 10a.

First, as shown in FIG. 6, when the operation of the setting mode in the light source device 10a is started by a command input and the like to the microcomputer 25, the control unit 24 sets the voltage value of the control signal to an initial value in a predetermined range (step S1). Then, the control unit 24 executes APC control by using the set control signal (step S2). Accordingly, the control unit 24 specifies the drive value corresponding to the drive signal output from the control unit 24 (step S3). Next, the control unit 24 records a correspondence between the specified drive value and the light intensity indicated by the voltage value of the control signal at that time in the LUTs (step S4).

Then, the control unit 24 determines whether or not the next values exist in a predetermined range regarding the voltage value of the control signal (step S5). When the next voltage value exists as a result of determination (step S5; Yes), the voltage value of the control signal is set to a next value and the process of steps S1 to S4 is repeated. When the next voltage value does not exist as a result of determination (step S5; No), the control unit 24 stores the LUTs having a correspondence recorded so far by the process in the microcomputer 25 (step S6). With the above-described process, the operation of the setting mode is completed.

Moving to FIG. 7, when the operation of the operation mode of the light source device 10a is started by a command input or the like to the microcomputer 25, the control unit 24 sets the target light intensity of the output laser light (step S101). Next, the control unit 24 reads out the LUTs in the microcomputer 25 (step S102). Then, the control unit 24 specifies the drive value corresponding to the target light intensity set by referring to the LUTs (step S103). Further, the control unit 24 executes the ACC control using the control signal having the specified drive value (step S104). In addition, the control unit 24 specifies the light intensity of the laser light based on the detection signal output from the photodetector 22 (step S105).

Then, the control unit 24 determines whether or not the specified light intensity is equal to or smaller than a predetermined reference value (step S106). When it is determined that the light intensity exceeds the reference value as a result of determination (step S106; No), the process proceeds to step S108. On the other hand, when it is determined that the light intensity is equal to or smaller than the reference value as a result of determination (step S106; Yes), the control unit 24 determines whether or not the output of the laser light according to the scanning on the sample M ends (step S107). When the output of the laser light is continued as a result of determination (step S107; No), the target value of the light intensity is changed to the next value according to the scanning and the process of step S101 to step S106 is repeated.

On the other hand, when it is determined that the light intensity exceeds the reference value as a result of determination of step S106 (step S106; No) or the output of the laser light is stopped as a result of determination of step S107 (step S107; Yes), the control unit 24 stops the generation of the drive current by the drive unit 23 (step S108). With the above-described process, the operation of the operation mode is completed.

According to the above-described confocal microscope unit 1, the first excitation light output from the first subunit 6a is reflected by the dichroic mirror 9a and is scanned on the sample M through the scan mirror 4 and the scan lens 7 and the first fluorescence generated on the sample M according to the scanning is reflected by the dichroic mirror 9a through the scan lens 7 and the scan mirror 4 and is incident on the first subunit 6a, and an image is formed on the pinhole plate 12a in the first subunit 6a and is detected by the photodetector 13a. In addition, the second excitation light output from the second subunit 6b is reflected by the dichroic mirror 9b in the second subunit 6b, is transmitted through the dichroic mirror 9a in the first subunit 6a, and is scanned on the sample M through the scan mirror 4 and the scan lens 7, the second fluorescence generated from the sample M according to the scanning is transmitted through the dichroic mirror 9a through the scan lens 7 and the scan mirror 4, is reflected by the dichroic mirror 9b, and is incident on the second subunit 6b, and an image is formed on the pinhole plate 12b in the second subunit 6b and is detected by the photodetector 13b. Similarly, even in the other second and third subunits 6c and 6d, the excitation light irradiated from the own unit and the fluorescence generated according to the excitation light is reflected by the dichroic mirror of the own unit and is transmitted through the dichroic mirror of the other unit, so that the fluorescence generated according to each excitation light of two wavelengths can be detected independently.

In this embodiment, in the light source devices 10a to 10d, the LUTs indicating a correspondence between the drive current supplied to the light emitting element 21 and the light intensity of the excitation light are generated and stored in advance by the function of the setting mode of the control unit 24 and the control signal corresponding to the drive current corresponding to the target light intensity is output to the drive unit 23 supplying the drive current to the light emitting element 21 as the drive signal based on the LUTs by the function of the operation mode of the control unit 24. In addition, the drive current is stopped when the light intensity of the excitation light exceeds a predetermined value by the function of the operation mode. Accordingly, if the target light intensity is set to change the light intensity of the excitation light according to a change in the scan speed of the excitation light on the sample M, the light emitting element 21 can be driven at a high speed with high precision so that the light intensity of the excitation light is changed according to the light intensity. Further, the confocal microscope unit 1 can be safely used by the control of stopping the excitation light when the light intensity of the excitation light exceeds a predetermined value. As a result, it is possible to uniformize the irradiation energy of the excitation light to the sample M with high precision and to realize confocal imaging with high safety.

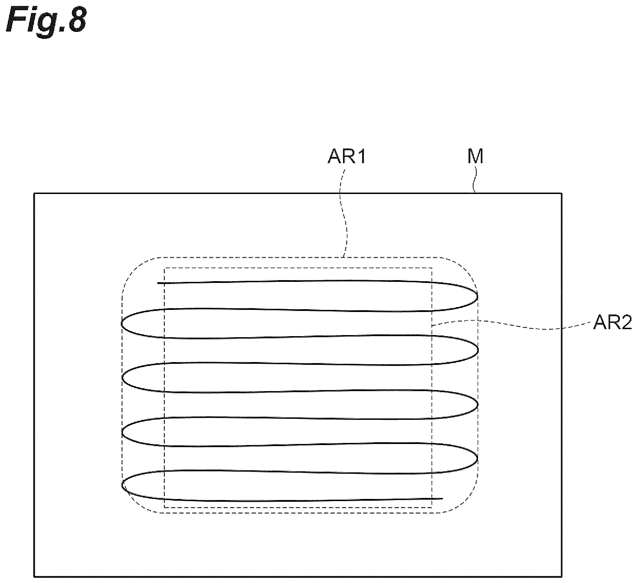

FIG. 8 is a plan view showing an example of a form of scanning the first excitation light on the sample M using the confocal microscope unit 1. In this way, an effective visual field range AR2 is set on the inside of a scan range AR1 using the scan mirror 4 on the sample M. The entire scan range AR1 is scanned by repeating two reciprocating linear scannings in one direction while shifting the scan position in the direction perpendicular to the one direction in this scan range AR1. At this time, in order to minimize the fading of the sample M due to the excitation light, the light source device 10a is operated to irradiate the first excitation light only during the scanning in the effective visual field range AR2 inside the scan range AR1.

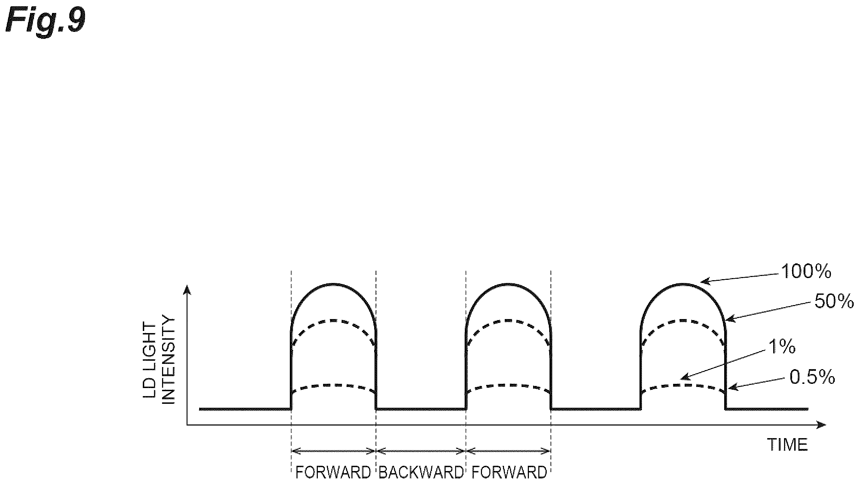

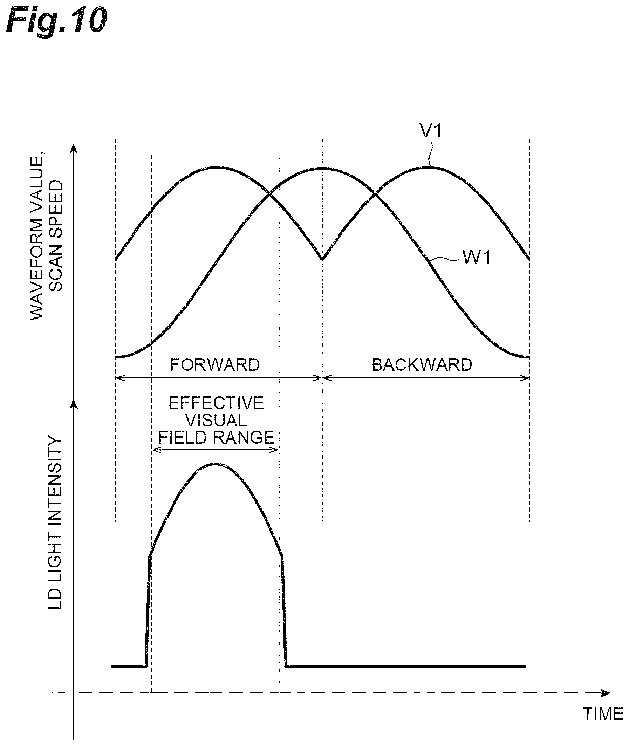

Further, FIG. 9 shows a temporal change in the light intensity of the laser light output from the light source device 10a according to the scan form shown in FIG. 8 and FIG. 10 shows a temporal change in the light intensity of FIG. 9 in correspondence with the sweep waveform of the scan mirror 4. The lower side of FIG. 10 shows a temporal change in the light intensity and the upper side of FIG. 10 shows a temporal change in the sweep waveform W1 of the drive signal of the scan mirror 4 and the scan speed V1 of the laser light according to the temporal change in the light intensity. In this embodiment, a sine wave is used as the sweep waveform W1 of the drive signal for tilting the reflection angle of the scan mirror 4 in one direction. Therefore, if the light intensity of the laser light output from the light source device 10a is made uniform, the irradiation energy of the laser light per unit area in the effective visual field range AR2 on the sample M becomes non-uniform and color fading unevenness occurs. In order to prevent this, the light source device 10a realizes uniform irradiation energy in the effective visual field range AR2 by modulating the LD light intensity according to the scan speed of the scan mirror 4. That is, the light source device 10a is operated to output the laser light by the scanning in one direction (forward direction) during the reciprocating scanning (forward and backward directions) in the effective visual field range AR2 of the sample M and the light intensity of the laser light during the scanning is set so that the light intensity of the laser light irradiated to the center portion of the effective visual field range AR2 is maximized and the light intensity of the laser light irradiated from the center to the edge of the effective visual field range AR2 gradually decreases. Specifically, the light source device 10a sets the voltage value of the control signal set during the operation in the operation mode to be changed according to the waveform of the scan speed V1, which is the differentiated waveform of the sweep waveform W1. Accordingly, it is possible to modulate the LD light intensity that realizes the uniform irradiation energy of the laser light in the effective visual field range AR2 of the sample M.

In addition, in the light source device 10a of this embodiment, the maximum value of the light intensity of the laser light can be set according to the input value to the microcomputer 25 in order to set the average light intensity of the laser light suitable for observing the sample M. For example, in the light source device 10a, the modulation degree of the light intensity of the laser light is constant, and the maximum value of the light intensity can be set within the range of 1% to 100%. In this case, if the modulation degree is two, the light intensity of the laser light can be changed in a dynamic range of 100 times (200 times including modulation).

Further, in this embodiment, the light source devices 10a to 10d include the switch SW2 which feeds back the detection signal from the photodetector 22 to the output of the control signal of the control unit 24 in the setting mode and inputs the detection signal to the control unit 24 in the operation mode. In the case of such a configuration, the detection signal from the photodetector 22 can be appropriately output during the operation of the function of the setting mode and the operation of the function of the operation mode. As a result, it is possible to achieve both uniformity of irradiation energy of excitation light and improvement of safety.

Further, in this embodiment, the control unit 24 functions to execute the APC control of increasing and decreasing the drive signal so that a difference between the detection signal and the control signal decreases in the setting mode and to execute the ACC control of outputting the drive signal based on the control signal in the operation mode. In the case of such a configuration, it is possible to store a correspondence between the drive current and the light intensity of the excitation light with high precision when the function of the setting mode is operated and to increase the driving speed of the light emitting element when the function of the operation mode is operated. Particularly, even when there are individual differences or changes over time in the light emission characteristics of the light emitting element 21, or changes in environmental temperature, it is possible to control the light intensity of the excitation light with high precision. As a result, it is possible to uniformize the irradiation energy of the excitation light to the sample M with higher precision.

Further, in this embodiment, the drive unit 23 is configured by the voltage control current source that generates the drive current based on the drive signal. In this case, the configuration of the light source devices 10a to 10d can be simplified.

Further, in this embodiment, the control unit 24 is operated to generate and store the LUTs indicating a correspondence between the drive value corresponding to the drive current and the light intensity indicated by the control signal in the setting mode and to execute the ACC control by using the control signal having the drive value corresponding to the target light intensity based on the LUTs in the operation mode. According to such a configuration, the LUTs indicating a correspondence between the drive value for driving the light emitting element 21 and the light intensity indicated by the control signal are generated and stored in advance by the function of the setting mode of the control unit 24 and the control signal corresponding to the drive value corresponding to the target light intensity is output to the drive unit 23 supplying the drive current to the light emitting element 21 as the drive signal based on the LUTs by the function of the operation mode of the control unit 24. As a result, it is possible to uniformize the irradiation energy of the excitation light to the sample M with high precision.

Although various embodiments of the present disclosure have been described above, the present disclosure is not limited to the above-described embodiments and may be modified or applied to other things within the scope of not changing the gist described in each claim.

In the confocal microscope unit 1 according to the above-described embodiment, the control units 24 of the light source devices 10a to 10d may have the following functions. That is, the control unit 24 may generate and store the LUTs indicating a correspondence between the drive value corresponding to the drive signal and the light intensity indicated by the detection signal output from the photodetector 22 in the setting mode and may execute the ACC control based on the LUTs in the operation mode. Even with such modified examples, it is possible to uniformize the irradiation energy of the excitation light to the sample M with high precision.

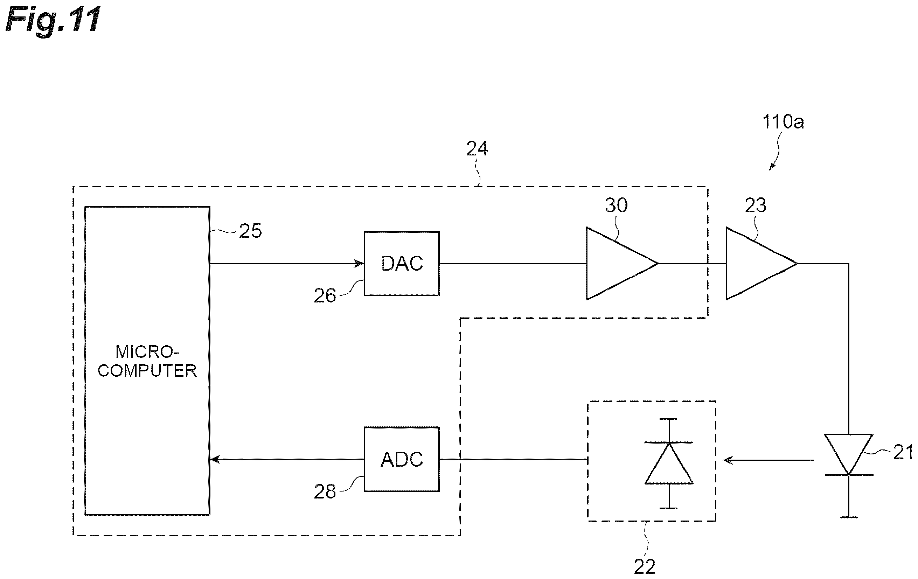

Further, FIG. 11 shows a circuit configuration of a light source device 110a according to a modified example. In the light source device 110a, the switches SW1 and SW2 of the light source device 10a do not exist and the detection signal output from the photodetector 22 is input to the microcomputer as the digital value of the light intensity via the ADC 28. When the function of the setting mode is operated, the microcomputer 25 of the light source device 110a adjusts the control value so that the detection signal output from the photodetector 22 becomes a desired value (desired light intensity) on firmware (FW) and outputs the control value to the DAC 26. The DAC 26 receives the adjusted control value output from the microcomputer 25, converts the control value into the control signal as a voltage signal, and outputs the control signal to the amplifier 30. Then, the amplifier 30 generates the drive signal based on the input control signal and outputs the drive signal to the drive unit 23. In the drive unit 23, the drive current to be supplied to the light emitting element 21 is generated based on the drive signal and is supplied to the light emitting element 21. The photodetector 22 detects the emission of light again and the detection signal output from the photodetector 22 is input to the microcomputer via the ADC 28 again as the digital value of the light intensity. The microcomputer 25 executes the APC control by repeating this operation until the detection signal becomes a desired value and records the control value when it becomes the desired value in the LUTs together with the corresponding light intensity. Further, the microcomputer 25 executes the ACC control using the LUTs when the function of the operation mode is operated and outputs the control value generated as a result of the control to the DAC 26. At the same time, the microcomputer 25 executes the control of stopping the drive current based on the digital value of the light intensity input from the ADC 28 when the function of the operation mode is operated. Even with such modified examples, it is possible to uniformize the irradiation energy of the excitation light to the sample M with high precision and to realize confocal imaging with high safety.

In the above-described embodiment, the light source unit preferably includes a switch that feeds back the detection signal from the photodetector to the output of the control signal of the control unit in the setting mode and inputs the detection signal to the control unit in the operation mode. In this case, the detection signal from the photodetector can be appropriately output when the function of the setting mode is operated and when the function of the operation mode is operated. As a result, it is possible to achieve both uniformity of irradiation energy of excitation light and improvement of safety.

Further, in the above-described embodiments, the control unit preferably executes the automatic light intensity control of increasing and decreasing the drive signal so that a difference between the detection signal and the control signal decreases in the setting mode and executes the auto current control of outputting the drive signal based on the control signal in the operation mode. In this case, it is possible to store a correspondence between the drive current and the light intensity of the excitation light with high precision when the function of the setting mode is operated and to increase the driving speed of the light source when the function of the operation mode is operated. As a result, it is possible to uniformize the irradiation energy of the excitation light to the sample with further higher precision.

Further, in the above-described embodiments, the drive unit preferably includes the voltage control current source that generates a drive current based on the drive signal. In this case, the configuration of the light source unit can be simplified.

Furthermore, in the above-described embodiments, the control unit preferably generates and stores a data table indicating a correspondence between the drive value corresponding to the drive current and the light intensity indicated by the control signal in the setting mode and executes the second control by using the control signal having the drive value corresponding to the target light intensity based on the data table in the operation mode. According to such a configuration, a data table indicating a correspondence between the drive value for driving the light source and the light intensity indicated by the control signal is generated and stored in advance by the function of the setting mode of the control unit and the control signal corresponding to the drive value corresponding to the target light intensity is output to the drive unit supplying the drive current to the light source as the drive signal based on the data table, by the function of the operation mode of the control unit. As a result, it is possible to uniformize the irradiation energy of the excitation light to the sample with high precision.

Furthermore, in the above-described embodiments, the control unit preferably generates and stores a data table indicating a correspondence between the drive value corresponding to the drive signal and the light intensity indicated by the detection signal in the setting mode and executes the second control by using the control signal having the drive value corresponding to the target light intensity based on the data table in the operation mode. According to such a configuration, a data table indicating a correspondence between the drive value for driving the light source and the light intensity of the excitation light indicated by the detection signal is generated and stored in advance by the function of the setting mode of the control unit and the control signal corresponding to the drive value corresponding to the target light intensity is output to the drive unit supplying the drive current to the light source as the drive signal based on the data table by the function of the operation mode of the control unit. As a result, it is possible to uniformize the irradiation energy of the excitation light to the sample with high precision.

### Industrial Applicability

The embodiments are intended for use as a confocal microscope unit, a confocal microscope, and a control method for a confocal microscope unit and are capable of uniformizing the irradiation energy of excitation light to a sample with high precision.

### Reference Signs List

1: confocal microscope unit, 4: scan mirror, 10a, 10b, 10c, 10d, 110a: light source device (light source unit), 21: light emitting element (light source), 22: photodetector, 23: drive unit, 24: control unit, 50: microscope, A: confocal microscope, P1: connection port, SW1, SW2: switch, M: sample.

## Claims

1. A confocal microscope unit (1), attached to a connection port (P1) of a microscope (50) with a microscope optical system to constitute a confocal microscope (A), comprising:
a light source unit (10a, 10b, 10c, 10d) which includes a light source (21) configured to output excitation light, a photodetector (22) configured to detect the excitation light output from the light source (21) and output a detection signal, a drive unit (23) configured to supply a drive current to the light source, and a control unit (24) configured to output a drive signal for controlling the drive current to the drive unit (23)according to a control signal indicating target light intensity;
a scan mirror (4) which scans the excitation light output from the light source unit on a sample (M); and
a housing (2) which is attachable to the connection port (P1) and fixes the scan mirror (4) and the light source unit (10a, 10b, 10c, 10d) thereto,
wherein the control unit (24) has two types of functions including a setting mode and an operation mode,
wherein in the setting mode, the control unit (24) executes automatic power control as a first control of increasing and decreasing the drive signal so that a difference between the detection signal and the control signal decreases, and executes the first control while changing a value of the control signal to generate and store a data table indicating a correspondence between a drive value corresponding to the drive current and light intensity of the excitation light indicated by the control signal,
wherein in the operation mode, the control unit (24) executes an automatic current control as a second control of outputting the control signal as the drive signal, reads out the data table, specifies, based on the data table, the drive value corresponding to the target light intensity, and executes the second control by using the control signal having the specified drive value, the target light intensity being set to change the light intensity of the excitation light according to a change in the scan speed of the excitation light on the sample (M), and executes control of stopping the drive current when the light intensity indicated by the detection signal exceeds a predetermined value.

2. The confocal microscope unit (1) according to claim 1,
wherein the light source unit (10a, 10b, 10c, 10d) includes a switch which feeds back the detection signal from the photodetector to an output of the control signal of the control unit (24) in the setting mode and inputs the detection signal to the control unit in the operation mode.

3. The confocal microscope unit (1) according to any one of claims 1 to 2,
wherein the drive unit (23) includes a voltage control current source which generates the drive current based on the drive signal.

4. The confocal microscope unit (1) according to any one of claims 1 to 3,
wherein the control unit (24) generates and stores a data table indicating a correspondence between a drive value corresponding to the drive signal and the light intensity indicated by the detection signal in the setting mode and executes the second control by using the control signal having the drive value corresponding to the target light intensity based on the data table in the operation mode.

5. A confocal microscope (A) comprising:
the confocal microscope unit (1) according to any one of claims 1 to 4; and
a microscope including the microscope optical system and a connection port (P1) to which the confocal microscope unit is attached.

6. A control method using a confocal microscope unit (1) attached to a connection port (P1) of a microscope with a microscope optical system to constitute a confocal microscope (A) and including a light source unit (10a, 10b, 10c, 10d) which includes a light source (21) configured to output excitation light, a photodetector configured to detect the excitation light output from the light source (21) and output a detection signal, a drive unit (23) configured to supply a drive current to the light source, and a control unit (24) configured to output a drive signal for controlling the drive current to the drive unit (23) according to a control signal indicating target light intensity, a scan mirror (4) which scans the excitation light output from the light source unit (10a, 10b, 10c, 10d) on a sample (M), and a housing (2) which is attachable to the connection port (P1) and fixes the scan mirror (4) and the light source unit (10a, 10b, 10c, 10d) thereto, the control method comprising operating in a setting mode and in an operation mode:
in the setting mode, the method comprises executing automatic power control as a first control of increasing and decreasing the drive signal so that a difference between the detection signal and the control signal decreases, and executing the first control while changing a value of the control signal to generate and store a data table indicating a correspondence between a drive value corresponding to the drive current and light intensity of the excitation light indicated by the control signal,
in the operation mode, the method comprises executing an automatic current control as a second control of outputting the control signal as the drive signal, reading out the data table, specifying, based on the data table, the drive value corresponding to the target light intensity, and executing the second control by using the control signal having the specified drive value, the target light intensity being set to change the light intensity of the excitation light according to a change in the scan speed of the excitation light on the sample (M), and executing control of stopping the drive current when the light intensity indicated by the detection signal exceeds a predetermined value.

## Patentansprüche

1. Konfokale Mikroskopeinheit (1), die an einem Verbindungsanschluss (P1) eines Mikroskops (50) mit einem optischen Mikroskopsystem angebracht ist, um ein konfokales Mikroskop (A) zu bilden, umfassend:
eine Lichtquelleneinheit (10a, 10b, 10c, 10d), die eine Lichtquelle (21) einschließt, die ausgebildet ist, um Anregungslicht auszugeben, einen Photodetektor (22), der ausgebildet ist, um das von der Lichtquelle (21) ausgegebene Anregungslicht zu detektieren und ein Detektionssignal auszugeben, eine Treibereinheit (23), die ausgebildet ist, um der Lichtquelle einen Treibersstrom zuzuführen, und eine Steuereinheit (24), die ausgebildet ist, um ein Treibersignal zum Steuern des Treibersstroms zur Treibereinheit (23) entsprechend einem Steuersignal, das eine Ziellichtintensität angibt, auszugeben;
einen Scanspiegel (4), der das von der Lichtquelleneinheit ausgegebene Anregungslicht auf einer Probe (M) scannt; und
ein Gehäuse (2), das an dem Verbindungsanschluss (P1) anbringbar ist, und den Scanspiegel (4) und die Lichtquelleneinheit (10a, 10b, 10c, 10d) daran fixiert,
wobei die Steuereinheit (24) zwei Funktionsarten aufweist, die einen Einstellmodus und einen Betriebsmodus einschließen,
wobei die Steuereinheit (24) im Einstellmodus eine automatische Leistungssteuerung als eine erste Steuerung zum Erhöhen und Verringern des Treibersignals ausführt, sodass sich ein Unterschied zwischen dem Detektionssignal und dem Steuersignal verringert, und die erste Steuerung beim Ändern eines Werts des Steuersignals ausführt, um eine Datentabelle zu erzeugen und zu speichern, die eine Entsprechung zwischen einem dem Treibersstrom entsprechenden Treiberswert und einer durch das Steuersignal angegebenen Lichtintensität des Anregungslichts angibt,
wobei die Steuereinheit (24) im Betriebsmodus eine automatische Stromsteuerung als zweite Steuerung zum Ausgeben des Steuersignals als das Treibersignal ausführt, die Datentabelle ausliest, auf der Grundlage der Datentabelle den der Ziellichtintensität entsprechenden Treiberswert spezifiziert, und die zweite Steuerung unter Verwendung des Steuersignals ausführt, das den bestimmten Treibwert aufweist, wobei die Ziellichtintensität eingestellt ist, um die Lichtintensität des Anregungslichts entsprechend einer Änderung der Scangeschwindigkeit des Anregungslichts auf der Probe (M) zu ändern, und eine Steuerung zum Stoppen des Treiberstroms ausführt, wenn die durch das Detektionssignal angegebene Lichtintensität einen vorbestimmten Wert überschreitet.

2. Konfokale Mikroskopeinheit (1) nach Anspruch 1,
wobei die Lichtquelleneinheit (10a, 10b, 10c, 10d) einen Schalter einschließt, der im Einstellmodus das Detektionssignal vom Photodetektor auf den Ausgang des Steuersignals der Steuereinheit (24) zurückführt und das Detektionssignal im Betriebsmodus in die Steuereinheit eingibt.

3. Konfokale Mikroskopeinheit (1) nach einem der Ansprüche 1 bis 2,
wobei die Treibereinheit (23) eine Stromquelle zur Spannungssteuerung einschließt, die den Treibersstrom auf Grundlage des Treibersignals erzeugt.

4. Konfokale Mikroskopeinheit (1) nach einem der Ansprüche 1 bis 3,
wobei die Steuereinheit (24) im Einstellmodus eine Datentabelle erzeugt und speichert, die eine Entsprechung zwischen einem dem Treibersignal entsprechenden Treiberswert und der durch das Detektionssignal angegebenen Lichtintensität angibt, und die zweite Steuerung im Betriebsmodus unter Verwendung des Steuersignals, das den der Ziellichtintensität auf Grundlage der Datentabelle entsprechenden Treiberswert aufweist, ausführt.

5. Konfokales Mikroskop (A), umfassend:
die konfokale Mikroskopeinheit (1) nach einem der Ansprüche 1 bis 4; und
ein Mikroskop, welches das optische Mikroskopsystem und einen Verbindungsanschluss (P1) einschließt, an dem die konfokale Mikroskopeinheit angebracht ist.

6. Steuerungsverfahren unter Verwendung einer konfokalen Mikroskopeinheit (1), die an einem Verbindungsanschluss (P1) eines Mikroskops mit einem optischen Mikroskopsystem angebracht ist, um ein konfokales Mikroskop (A) zu bilden, und einschließend eine Lichtquelleneinheit (10a, 10b, 10c, 10d), die eine Lichtquelle (21) einschließt, die ausgebildet ist, um Anregungslicht auszugeben, einen Photodetektor, der ausgebildet ist, um das von der Lichtquelle (21) ausgegebene Anregungslicht zu detektieren und ein Detektionssignal auszugeben, eine Treibereinheit (23), die ausgebildet ist, um der Lichtquelle einen Treibstrom zuzuführen, und eine Steuereinheit (24), die ausgebildet ist, um ein Treibersignal zum Steuern des Treibestroms zur Treibereinheit (23) entsprechend einem Steuersignal, das eine Ziellichtintensität angibt, einen Scanspiegel (4), der das von der Lichtquelleneinheit (10a, 10b, 10c, 10d) ausgegebene Anregungslicht auf einer Probe (M) scannt, und ein Gehäuse (2), das an dem Verbindungsanschluss (P1) anbringbar ist und den Scanspiegel (4) und die Lichtquelleneinheit (10a, 10b, 10c, 10d) daran fixiert, auszugeben, wobei das Steuerungsverfahren Arbeiten in einem Einstellmodus und in einem Betriebsmodus Folgendes umfasst:
das Verfahren im Einstellmodus Ausführen einer automatischen Leistungssteuerung als eine erste Steuerung zum Erhöhen und Verringern des Treibersignals umfasst, sodass sich ein Unterschied zwischen dem Detektionssignal und dem Steuersignal verringert, und Ausführen der ersten Steuerung beim Ändern eines Werts des Steuersignals ausführt, um eine Datentabelle zu erzeugen und zu speichern, die eine Entsprechung zwischen einem dem Treibersstrom entsprechenden Treiberswert und einer durch das Steuersignal angegebenen Lichtintensität des Anregungslichts angibt,
das Verfahren im Betriebsmodus Ausführen einer automatischen Stromsteuerung als zweite Steuerung zum Ausgeben des Steuersignals als das Ansteuersignal, das Auslesen der Datentabelle, das Spezifizieren des der Ziellichtintensität entsprechenden Treiberswerts auf Grundlage der Datentabelle umfasst, und Ausführen der zweiten Steuerung unter Verwendung des Steuersignals, das den bestimmten Treiberswert aufweist, wobei die Ziellichtintensität eingestellt ist, um die Lichtintensität des Anregungslichts entsprechend einer Änderung der Scangeschwindigkeit des Anregungslichts auf der Probe (M) zu ändern, und Ausführen einer Steuerung zum Stoppen des Treibersstroms, wenn die durch das Detektionssignal angegebene Lichtintensität einen vorbestimmten Wert überschreitet.

## Revendications

1. Unité (1) de microscope confocal, fixée à un port de connexion (P1) d'un microscope (50) avec un système optique de microscope pour constituer un microscope confocal (A), comprenant :
une unité (10a, 10b, 10c, 10d) formant source de lumière, qui inclut une source de lumière (21) configurée pour émettre une lumière d'excitation, un photodétecteur (22) configuré pour détecter la lumière d'excitation émise par la source de lumière (21) et pour émettre un signal de détection, une unité d'entraînement (23), configurée pour fournir un courant d'entraînement à la source de lumière, et une unité de commande (24), configurée pour émettre un signal d'entraînement pour commander le courant d'entraînement vers l'unité d'entraînement (23) en fonction d'un signal de commande indiquant une intensité lumineuse cible ;
un miroir de balayage (4), qui opère un balayage de la lumière d'excitation émise par l'unité formant source de lumière sur un échantillon (M) ; et
un boîtier (2), qui est apte à être fixé au port de connexion (P1) et qui fixe à celui-ci le miroir de balayage (4) et l'unité (10a, 10b, 10c, 10d) formant source de lumière,
dans laquelle l'unité de commande (24) présente deux types de fonctions, incluant un mode de paramétrage et un mode de fonctionnement,
dans laquelle, en mode de paramétrage, l'unité de commande (24) exécute une commande automatique de puissance en tant que première commande, consistant à augmenter et à diminuer le signal d'entraînement de telle sorte qu'une différence entre le signal de détection et le signal de commande diminue, et exécute la première commande tout en modifiant une valeur du signal de commande pour générer et mémoriser une table de données indiquant une correspondance entre une valeur d'entraînement correspondant au courant d'entraînement et l'intensité lumineuse de la lumière d'excitation indiquée par le signal de commande,
dans laquelle, en mode de fonctionnement, l'unité de commande (24) exécute une commande automatique de courant en tant que deuxième commande consistant à délivrer le signal de commande en tant que signal d'entraînement, lit la table de données, spécifie, sur la base de la table de données, la valeur d'entraînement correspondant à l'intensité lumineuse cible, et exécute la deuxième commande en utilisant le signal de commande présentant la valeur d'entraînement spécifiée, l'intensité lumineuse cible étant réglée pour modifier l'intensité lumineuse de la lumière d'excitation selon un changement de la vitesse de balayage de la lumière d'excitation sur l'échantillon (M), et exécute une commande d'arrêt du courant d'entraînement lorsque l'intensité lumineuse indiquée par le signal de détection dépasse une valeur prédéterminée.

2. Unité (1) de microscope confocal selon la revendication 1,
dans laquelle l'unité (10a, 10b, 10c, 10d) formant source de lumière inclut un commutateur qui, en mode de paramétrage, renvoie le signal de détection du photodétecteur vers une sortie du signal de commande de l'unité de commande (24), et qui, en mode de fonctionnement, applique le signal de détection à l'unité de commande.

3. Unité (1) de microscope confocal selon une quelconque des revendications 1 à 2,
dans laquelle l'unité d'entraînement (23) inclut une source de courant commandée en tension qui génère le courant d'entraînement en fonction du signal d'entraînement.

4. Unité (1) de microscope confocal selon une quelconque des revendications 1 à 3,
dans laquelle l'unité de commande (24) génère et mémorise une table de données indiquant, en mode de paramétrage, une correspondance entre une valeur d'entraînement correspondant au signal d'entraînement et l'intensité lumineuse indiquée par le signal de détection, et, en mode de fonctionnement, exécute la deuxième commande en utilisant le signal de commande présentant la valeur d'entraînement correspondant à l'intensité lumineuse cible sur la base de la table de données.

5. Microscope confocal (A), comprenant :
l'unité (1) de microscope confocal selon l'une quelconque des revendications 1 à 4 ; et
un microscope incluant le système optique de microscope et un port de connexion (P1) auquel l'unité de microscope confocal est fixée.

6. Procédé de commande utilisant une unité (1) de microscope confocal fixée à un port de connexion (P1) d'un microscope avec un système optique de microscope pour constituer un microscope confocal (A), et incluant une unité (10a, 10b, 10c, 10d) formant source de lumière qui inclut une source de lumière (21), configurée pour émettre une lumière d'excitation, un photodétecteur, configuré pour détecter la lumière d'excitation émise par la source de lumière (21) et pour émettre un signal de détection, une unité d'entraînement (23), configurée pour fournir un courant d'entraînement à la source de lumière, et une unité de commande (24), configurée pour émettre un signal d'entraînement afin de commander le courant d'entraînement vers l'unité d'entraînement (23) selon un signal de commande indiquant une intensité lumineuse cible, un miroir de balayage (4), qui opère un balayage de la lumière d'excitation émise par l'unité (10a, 10b, 10c, 10d) formant source de lumière sur un échantillon (M), et un boîtier (2) qui est apte à être fixé au port de connexion (P1) et qui fixe à celui-ci le miroir de balayage (4) et l'unité (10a, 10b, 10c, 10d) formant source de lumière, le procédé de commande comprenant un fonctionnement selon un mode de paramétrage et selon un mode de fonctionnement :
en mode de paramétrage, le procédé comprend l'exécution d'une commande automatique de puissance en tant que première commande consistant à augmenter et à diminuer le signal d'entraînement de sorte qu'une différence entre le signal de détection et le signal de commande diminue, et l'exécution de la première commande tout en modifiant une valeur du signal de commande pour générer et mémoriser une table de données indiquant une correspondance entre une valeur d'entraînement correspondant au courant d'entraînement et l'intensité lumineuse de la lumière d'excitation indiquée par le signal de commande,
en mode de fonctionnement, le procédé comprend l'exécution d'une commande automatique de courant en tant que deuxième commande consistant à émettre le signal de commande en tant que signal d'entraînement, la lecture de la table de données, la spécification, sur la base de la table de données, de la valeur d'entraînement correspondant à l'intensité lumineuse cible, et l'exécution de la deuxième commande en utilisant le signal de commande présentant la valeur d'entraînement spécifiée, l'intensité lumineuse cible étant réglée pour modifier l'intensité lumineuse de la lumière d'excitation selon un changement de la vitesse de balayage de la lumière d'excitation sur l'échantillon (M), et l'exécution d'une commande d'arrêt du courant d'entraînement lorsque l'intensité lumineuse indiquée par le signal de détection dépasse une valeur prédéterminée.
